# EUROPÄISCHE PATENTSCHRIFT

(11) **EP 2 041 005 B1**
(45) Veröffentlichungstag und Bekanntmachung des Hinweises auf die Patenterteilung: **31.03.2010**
(21) Anmeldenummer: 07729742.2
(22) Anmeldetag: 31.05.2007
(51) Int. Cl.: B65G 1/127, B65G 47/51

(54) **VORRICHTUNG UND VERFAHREN ZUR LAGERUNG VON LAGEREINHEITEN**
APPARATUS AND METHOD FOR STORING STORAGE UNITS
DISPOSITIF ET PROCÉDÉ D'ENTREPOSAGE D'UNITÉS DE STOCKAGE

(30) Priorität: 14.07.2006 DE 102006033099; 17.01.2007 EP 07100696
(43) Veröffentlichungstag der Anmeldung: 01.04.2009
(73) Patentinhaber: SIEMENS AKTIENGESELLSCHAFT, 80333 München (DE)
(72) Erfinder: KLEIN, Matthias, 63456 Hanau (DE)
(86) Internationale Anmeldenummer: PCT/EP2007/055340
(87) Internationale Veröffentlichungsnummer: WO 2008/006644

(56) Entgegenhaltungen:
- DE-A1- 4 133 672
- DE-A1- 4 431 943
- US-A- 6 102 647

## Beschreibung

Die Erfindung betrifft eine Vorrichtung und ein Verfahren zur Lagerung von Lagereinheiten, insbesondere von Stückgutcontainern, so genannten ULDs (= unit-load-devices).

Üblicherweise werden auf Umschlagplätzen, z. B. Containerumschlagplätzen in einem Hafen oder auf einem Güterbahnhof, oder in Umschlaghallen, z. B. mit einem Bodenlager mit Blockstapelung oder mit einem Hochregallager, zum Umschlagen von Lagereinheiten, wie z. B. Stückgutcontainern oder Paletten, Flurfördergeräte bzw. -fahrzeuge, wie z. B. Hubumschlagfahrzeuge (auch kurz ELT genannt, mit ELT = elevating transfer vehicle), Gabelstapler, Portalstapler, Schienenfahrzeuge und/oder fahrbare Krananlagen, z. B. Portalkrane, Brückenkrane, und/oder Transtainer eingesetzt. Mittels der Fahrzeuge oder Flurförderfahrzeuge werden die Lagereinheiten zur Ein- bzw. Auslagerung in Lagerplätzen zu- oder abgeführt oder zur Zwischenlagerung innerhalb des Umschlagplatzes oder der Umschlaghalle hin- und herbewegt.

Um einen derartigen Umschlag von Lagereinheiten zu ermöglichen, sind üblicherweise in Zwischenräumen zwischen den Lagerplätzen Lagergassen oder Lagerbahnen vorgesehen, innerhalb derer sich die Fahrzeuge bewegen. In diesen Lagerbahnen sind beispielsweise Schienen, Induktionsschleifen, Gruben vorgesehen, die eine sichere Führung der Fahrzeuge und/oder eine Steuerung der Fahrzeuge, insbesondere von ferngesteuerten Fahrzeugen ermöglichen. Je nach Größe des Lagers auf dem Umschlagplatz oder in der Umschlaghalle werden mehrere Fahrzeuge in einer Lagerbahn zur Bedienung der Lagerplätze benötigt. Dabei sind die aus dem Umschlag der Lagereinheiten resultierenden Verfahr- oder Umschlagzeiten, d.h. die Zeit, die ein Fahrzeug für die Aufnahme und Abgabe bei Ein- bzw. Auslagerung bzw. die erneute Aufnahme und Abgabe bei einem Umstapeln einer oder mehrerer Lagereinheiten benötigt, von Bedeutung und beeinflusst die Durchsatzleistung des Lagers. Bei den bekannten Lagern ist bei dem Einsatz eines Fahrzeugs innerhalb einer Lagerbahn keine Umschlagredundanz, d.h. gleichzeitige Aus- und Einlagerung mehrerer Lagereinheiten in die Lagerplätze einer Lagerbahn, gegeben. Auch durch den Einsatz mehrerer Fahrzeuge kann eine solche Umschlagredundanz nicht erzielt werden, da sich die Fahrzeuge in der Lagerbahn gegenseitig behindern und somit nur ein sehr eingeschränkter Zugriff auf die einzulagernden und/oder auszulagernden Lagereinheiten möglich ist.

Aus der DE 44 31 9431 A1 ist eine Garage für Personenkraftwagen bekannt, welche eine Anzahl von Abstellplätzen aufweist, die an einem periodisch drehbar ausgebildeten Trägerkörper kippbeweglich angeordnet sind. Aus der DE 41 33 672 A1 ist eine ähnliche Drehbühnenvorrichtung als Parkgarage für Fahrzeuge bekannt. Aus der US 6,102,647 ist ein Transportwagen für zu transportierenden Gegenstände bekannt, der als ein Karussell mit Abstellflächen für die Gegenstände ausgebildet ist.

Der Erfindung liegt daher die Aufgabe zugrunde, eine Vorrichtung zur Lagerung von Lagereinheiten anzugeben, bei welcher die Lagereinheiten in kürzerer Zeit ein- oder ausgelagert bzw. umgestapelt werden können. Des Weiteren ist ein besonders einfaches Verfahren zur Lagerung von Lagereinheiten anzugeben.

Die Aufgabe wird erfindungsgemäß gelöst durch die Merkmale des unabhängigen Anspruchs 1. Vorteilhafte Weiterbildungen der Erfindung sind Gegenstand der Unteransprüche.

Die erfindungsgemäße Vorrichtung zur Lagerung von Lagereinheiten, insbesondere von Stückgutcontainern, umfasst mindestens ein um eine Drehachse drehbares Kreislager mit mehreren, kreisförmig um die Drehachse angeordneten Lagerplätzen.

Mit anderen Worten: Das Kreislager ist in Art einer Trommel eines Trommelrevolvers ausgebildet und weist mehrere, kreisförmig um die Trommelachse oder Lagerachse angeordnete Lagerplätze in Art von Lagerkammern auf. Durch Drehen des Kreislagers wird mindestens ein Lagerplatz in eine Einlagerungs- und/oder Auslagerungsposition gebracht. Durch weitere Drehung des Kreislagers können weitere Lagereinheiten in benachbarte Lagerplätze ein- bzw. ausgelagert werden. Ein derartiges rotierendes Kreislager mit mehreren Lagerplätzen ermöglicht das gleichzeitige Umschlagen von mehreren Lagereinheiten in verschiedenen Lagerplätzen. Darüber hinaus sind aufwendige fahrbare Flurförderfahrzeuge vermieden. Somit können die aufwendigen und großflächigen Laufbahnen reduziert und für weitere Lagerfläche genutzt werden. Insbesondere sind die maximalen Weg- oder Lagerstrecken zum Umschlagen der Lagereinheiten deutlich reduziert. Auch ist die Übergabehöhe für die Ein- bzw. Auslagerung auf einer bodennahen Ebene ermöglicht. Ferner sind schnelle Verfahr- und Zugriffszeiten und somit ein hoher Umschlagdurchsatz sichergestellt. Zudem kann eine bereits bestehende Lageranlage um ein derartiges Trommel-, Revolver- oder Kreislager modular erweitert werden. Dazu ist das Kreislager in Modulbauweise ausgebildet.

Für eine sichere und einfache Lagerung der Lagereinheiten in den Lagerplätzen verlaufen die Normalen der Lagerplätze (auch Stellflächen oder Lagerkammern genannt) rechtwinklig zur Drehachse und behalten während der Drehbewegung des Kreislagers im Wesentlichen ihre Richtung bei. Die Drehachse stellt dabei die Mittelachse oder horizontale Achse des Kreislagers dar.

Um die Kapazität des Kreislagers und die Verfügbarkeit der Lagerplätze zu erhöhen, sind die Lagerplätze um eine im Wesentlichen horizontale Drehachse kreisförmig in mindestens einer Ebene oder in mehreren Ebenen hintereinander angeordnet. Alternativ oder zusätzlich kann der jeweilige Lagerplatz in Art einer Doppelkammer für die Aufnahme von zwei oder mehreren Lagereinheiten ausgelegt sein. Dies führt zu einer nochmaligen Kapazitätserhöhung bei gleichzeitiger Erhöhung der Durchsatzzeiten. Insbesondere ist hierdurch in einfacher Art und Weise eine maximale Umschlagredundanz ermöglicht.

Für eine möglichst variable und schnelle Ein- und Auslagerung der Lagereinheiten auch bei einer kurzfristigen Änderung von Ein- und Auslagerungsplänen sind die Lagerplätze verschiedener Ebenen asynchron oder synchron bewegbar. Beispielsweise wird die erste Ebene von Lagerplätzen rotiert und in eine Einlagerungs- oder Auslagerungsposition gebracht, wohingegen die hinteren Ebenen in der Position verbleiben. Alternativ können mehrere Ebenen gleichzeitig rotiert werden. Hierdurch ist eine besonders hohe Variabilität in der Ein- und Auslagerung der Lagereinheiten in die Lagerplätze gegeben.

Vorzugsweise sind die Lagerplätze ein- oder beidseitig bestückbar. Beispielsweise sind die Lagerplätze von einer Seite beladbar und der gegenüberliegenden Seite entladbar. Somit können die Lagereinheiten beispielsweise bei einem Hafenumschlagplatz landseitig einseitig eingelagert und luft- oder wasserseitig einseitig ausgelagert werden oder umgekehrt.

In einer möglichen Ausführungsform sind mindestens eine Einlagerungsbahn und/oder eine Auslagerungsbahn vorgesehen. So können beispielsweise eine oder mehrere Einlagerungsbahnen an der einen Stirnseite des Kreislagers und eine oder mehrere Auslagerungsbahnen an der anderen Stirnseite des Kreislagers vorgesehen sein. Alternativ können in verschiedenen Höhenebenen Ein- und Auslagerungsbahnen ein- oder beidseitig vorgesehen sein. Vorzugsweise wird das Kreislager derart rotiert, dass ein zu beladener und/oder entladener Lagerplatz zur Einlagerung und/oder Auslagerung an die Einlagerungsbahn bzw. Auslagerungsbahn mündend positionierbar ist.

Je nach Größe des vorgegebenen Umschlaglagers können mehrere Kreislager parallel zueinander, insbesondere nebeneinander, hintereinander, versetzt zueinander und/oder übereinander angeordnet sein. Dabei sind zwischen den Kreislagern zweckmäßigerweise Bereitstellungsbahnen und/oder Umlagerungsbahnen und/oder Staubahnen angeordnet. Die Bereitstellungsbahnen dienen dabei in Zeiten hoher Auslastung des Umschlaglagers für eine schnellere Verfügbarkeit und Bereitstellung der Lagereinheiten. Bei einer Überlastung des Umschlaglagers können gegebenenfalls Lagereinheit auf Staubahnen kurzzeitig zwischengelagert werden. Vorzugsweise sind die Einlagerungsbahn, die Auslagerungsbahn, die Bereitstellungsbahn, die Umlagerungsbahn und/oder die Staubahn als Förderbänder, insbesondere Linearbänder, Rollenbänder oder Rollenförderer ausgebildet. Alternativ können diese Bahnen auch mit fahrbaren Flurförderfahrzeugen befahrbar sein.

Für eine möglichst variable und wahlfreie Steuerung der Lagerung bzw. Umlagerung der Lagereinheiten werden das oder die Kreislager mittels eines Antriebssystems betrieben. Das Antriebssystem, z. B. zwei Elektromotoren, die über ein Lager mit dem oder den Kreislagern verbunden sind, treibt dabei ein Kreislager an.

Hinsichtlich des Verfahrens zur Lagerung von Lagereinheiten wird die Aufgabe erfindungsgemäß gelöst durch das Verfahren des Anspruchs 13. Dabei können die Lagereinheiten gleichzeitig in mehreren Lagerplätzen ein- oder ausgelagert werden. Zusätzlich können die Lagereinheiten in den Lagerplätzen in einer Ebene oder in mehreren Ebenen hintereinander gelagert werden. Dies stellt eine größtmögliche Lagerkapazität dar. Dabei können die Lagereinheiten ein- oder beidseitig des Kreislagers den Lagerplätzen zugeführt bzw. von diesen abgeführt werden.

Die mit der Erfindung erzielten Vorteile bestehen insbesondere darin, dass mittels eines trommelartigen Kreislagers mit mehreren kreisförmig angeordneten Lagerplätzen kurze Zugriffszeiten und somit eine hohe Verfügbarkeit der Lagerplätze und daraus resultierend niedrige Durchsatzzeiten ermöglicht sind. Hierdurch können hohe Leistungsspitzen und ein hoher Lagerungsbedarf einfach, variabel und schnell bedient werden. Zudem eignet sich das Kreislager für einen modularen Aufbau und kann bestehende Anlagen erweitern. Dabei sind mittels des selbst angetriebenen, insbesondere drehbaren Kreislagers Förderfahrzeug und Lager in einer Einheit integriert. Dies ermöglicht in einfacher Art und Weise ein sehr variables Lager in mehreren Ebenen hintereinander, nebeneinander und versetzt zueinander. Darüber hinaus kann die Reihenfolge der zu lagernden Lagereinheiten jederzeit schnell und einfach geändert werden. Somit ist ein hoher Umschlag ermöglicht. Auch ist ein Quer- und Längstransport zwischen den Kreislagern gleichzeitig möglich.

Ausführungsbeispiele der Erfindung werden anhand einer Zeichnung näher erläutert. Darin zeigen:
- Fig. 1: schematisch eine Vorrichtung zur Lagerung von Lagereinheiten mit einem um eine Drehachse drehbaren Kreislager mit mehreren kreisförmig um die Drehachse angeordneten Lagerplätzen,
- Fig. 2: schematisch eine alternative Ausführungsform für eine Vorrichtung zur Lagerung von Lagereinheiten mit zwei zueinander versetzt angeordneten Kreislagern,
- Fig. 3 bis 6: schematisch verschiedene alternative Ausführungsformen eine Vorrichtung zur Lagerung von Lagereinheiten mit mehreren Kreislagern, die in mehreren Ebenen hinter-, neben- und zueinander angeordnet sind.

Einander entsprechende Teile sind in allen Figuren mit den gleichen Bezugszeichen versehen.

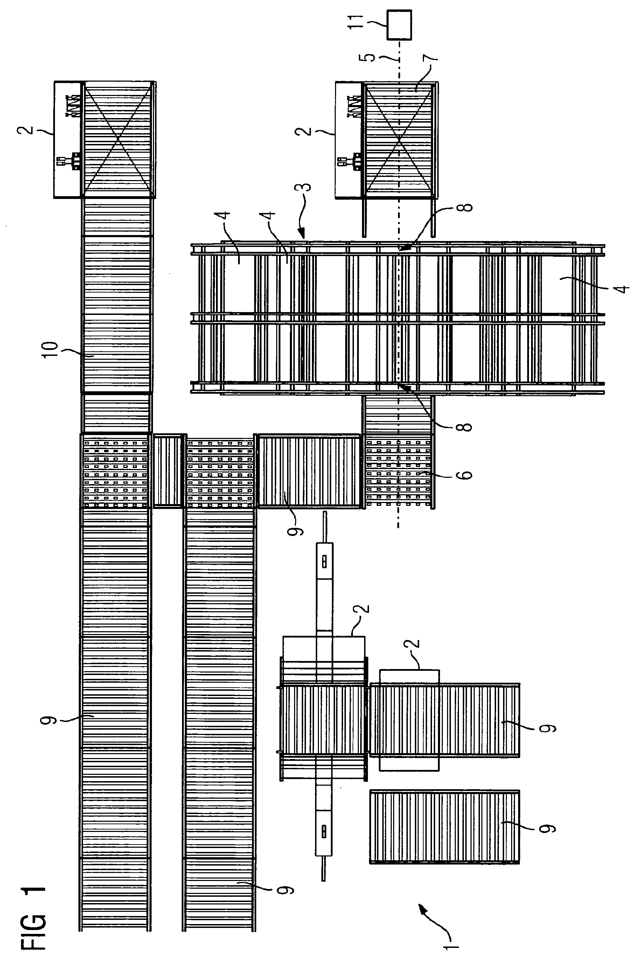

Figur 1 zeigt schematisch eine Vorrichtung 1 zur Lagerung von Lagereinheiten 2 (im Weiteren kurz Vorrichtung 1 genannt). Bei der Vorrichtung 1 handelt es sich um einen Umschlagplatz für Lagereinheiten 2 mit einer hohen Lagerkapazität bei gleichzeitig hohem Durchsatz der Lagereinheiten 2 durch die erfindungsgemäße Lagerung der Lagereinheiten 2 in einem Kreislager 3 mit mehreren Lagerplätzen 4. Als Lagereinheiten 2 werden insbesondere Stückgutcontainer, Paletten oder andere geeignete Lagerbehältnisse verwendet. Die Lagerplätze 4 sind kammerartig zur Aufnahme mindestens einer Lagereinheit 2 ausgebildet. Alternativ können die Lagerplätze 4 für eine Umschlagredundanz auch zur Aufnahme von zwei oder mehreren Lagereinheiten 2 ausgebildet sein. In diesem Fall können mehrere Lagereinheiten 2 gleichzeitig ein- und/oder ausgelagert werden. Dies führt zu einer Verbesserung, insbesondere Erhöhung der Durchsatzzeiten der Vorrichtung 1.

Das Kreislager 3 ist um eine Drehachse 5 drehbar gelagert. Die Lagerplätze 4 sind kreisförmig um die Drehachse 5 angeordnet. Für eine sichere und stabile Lagerung der Lagereinheiten 2 verlaufen dabei die Normalen der Lagerplätze 4 (auch Stellflächen genannt) rechtwinklig zur Drehachse 5. Dabei behalten die Normalen der Lagerplätze 4 während der Drehbewegung des Kreislagers 3 im Wesentlichen ihre Richtung bei. Mit anderen Worten: Die Lagereinheiten 2 werden im Wesentlichen in waagerechter Position um die Drehachse 5 kreisförmig bewegt.

Zur Ein- bzw. Auslagerung der Lagereinheiten 2 ist das Kreislager 3 ein- oder beidseitig belad- oder bestückbar. Im gezeigten Ausführungsbeispiel nach Figur 1 ist das Kreislager 3 beidseitig beladbar. Hierzu mündet eine Einlagerungsbahn 6 und eine Auslagerungsbahn 7 an gegenüberliegenden Stirnseiten des Kreislagers 3 in denjenigen Lagerplatz 4, der auf Übergabehöhe in einer vorgegebenen Übergabeposition 8 positioniert ist.
Zur Bereitstellung der ein- bzw. auszulagernden Lagereinheiten 2 kann die Vorrichtung 1 darüber hinaus eine vorgegebene Anzahl von Bereitstellungsbahnen 9 und/oder Staubahnen 10 umfassen.

Die Bahnen, insbesondere die Einlagerungsbahn 6, die Auslagerungsbahn 7, die Bereitstellungsbahn 9, und/oder die Staubahn 10 sind in herkömmlicher Art und Weise als Förderbänder, insbesondere Linearbänder, Rollenbänder oder Rollenförderer ausgebildet. Alternativ können diese Bahnen als befahrbare Laufbahnen mit Schienen oder anderen Führungselementen zur Führung eines Flurförderfahrzeugs ausgebildet sein. Über die Bereitstellungsbahn 9 werden die Lagereinheiten 2 dem Kreislager 3 zur Einlagerung zugeführt bzw. vom Kreislager 3 zur Auslagerung in ein Transportfahrzeug, z. B. einen Lastkraftwagen, einem Flugzeug, einem Schiff, abgeführt. Die Einlagerungsbahn 6 und die Auslagerungsbahn 7 dienen der direkten Einlagerung bzw. Auslagerung einer oder mehrerer Lagereinheiten 2 in die entsprechend positionierten Lagerplätze 4.

Zur Ein- bzw. Auslagerung des oder der Lagereinheiten 2 in die betreffenden, beispielsweise einem vorgegebenen Lagerungsplan entsprechenden Lagerplätze 4 wird das Kreislager 3 um die Drehachse 5, insbesondere die Mittelachse, gedreht, bis der oder die betreffenden Lagerplätze 4 entsprechend positioniert sind. Anschließend werden die Lagereinheiten 2 in den oder die Lagerplätze 4 wunschgemäß ein- bzw. ausgelagert. Zur Ein- bzw. Auslagerung weiterer Lagereinheiten 2 wird das Kreislager 3 weiter gedreht. Zur Drehung des Kreislagers 3 umfasst die Vorrichtung 1 ein Antriebssystem 11, das beispielsweise zwei Elektromotoren je Kreislager 3 umfasst. Das jeweilige Kreislager 3 steht beispielsweise mit dem äußeren Rahmen auf sechs Lagern, von denen zwei mittels der Elektromotoren angetrieben werden. Gegenüber einem achsengetriebenes Antriebssystem hat ein lagergetriebenes Antriebssystem 11 den Vorteil, dass es gut wartbar ist und durch eine doppelte Auslegung besonders ausfallsicher ist.

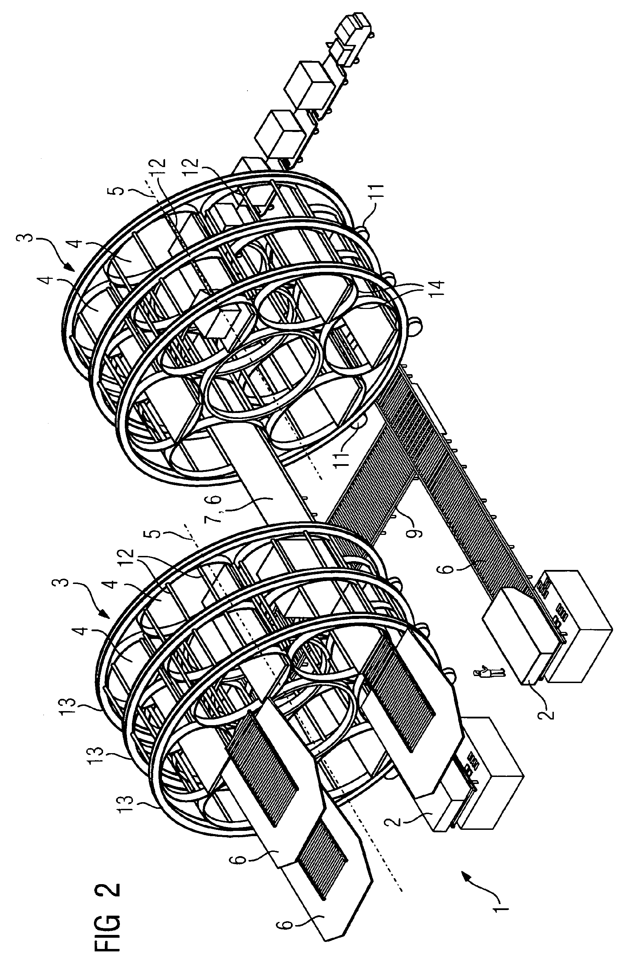

Figur 2 zeigt schematisch eine alternative Ausführungsform für eine Vorrichtung 1 zur Lagerung von Lagereinheiten 2 mit zwei zueinander versetzt angeordneten Kreislagern 3. Die beiden Kreislager 3 sind für eine gleichzeitige Ein- bzw. Auslagerung mehrerer Lagerplätze 4 stirnseitig mit mehreren Einlagerungsbahnen 6 versehen. Ausgangsseitig ist das jeweilige Kreislager 3 mit einer Auslagerungsbahn 7 versehen. Um eine Reduzierung von Förderbahnen und nicht nutzbarer Lagerflächen zu erzielen, sind die beiden Kreislager 3 derart versetzt zueinander und hintereinander angeordnet, dass die Auslagerungsbahn 7 des vorderen Kreislagers 3 die Einlagerungsbahn 6 des nachfolgenden Kreislagers 3 bildet.

In der perspektivischen Darstellung ist eine mögliche beispielhafte Form für Lagerplätze 4 dargestellt. Die Lagerplätze 4 können aber auch eine andere geeignete Form aufweisen. Im gezeigten Beispiel sind die Lagerplätze 4 zylinderförmig ausgeführt, wobei die Zylinderwand teilweise offen ausgebildet ist. Um ein seitliches Herabfallen der Lagereinheiten 2 von den Lagerplätzen 4 zu vermeiden, ist die Zylinderwand zumindest durch Längsstreben 12 gebildet. Stirnseitig weist der jeweilige Lagerplatz 4 jeweils eine kreisförmige Randstrebe 13 auf. Das zylinderförmige oder trommelartige Kreislager 3 weist für eine hinreichend stabile und feste Ausführung mehrere kreisförmige Ringstreben 14 auf.

Durch die offene Bauweise des Kreislagers 3 ist eine einfache Überwachung der Kapazität des Kreislagers 3 möglich. Darüber hinaus kann die Kapazität des Kreislagers 3 elektronisch überwacht werden. Hierzu sind die jeweiligen Lagerplätze 4 sowie die Bahnen 6 bis 10 mit entsprechenden, nicht näher dargestellten Sensoren versehen, die das Vorhandensein und die Bewegung der Lagereinheiten 2 überwachen.

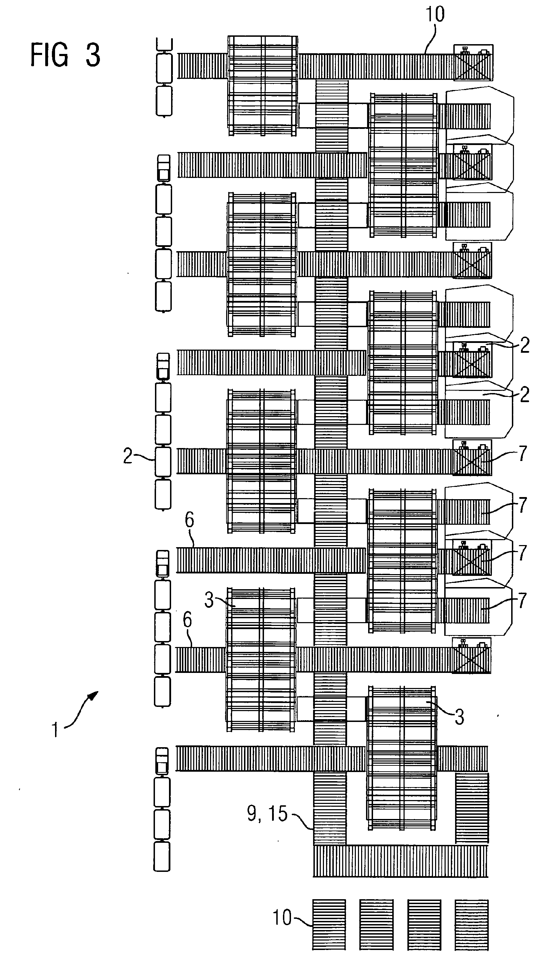

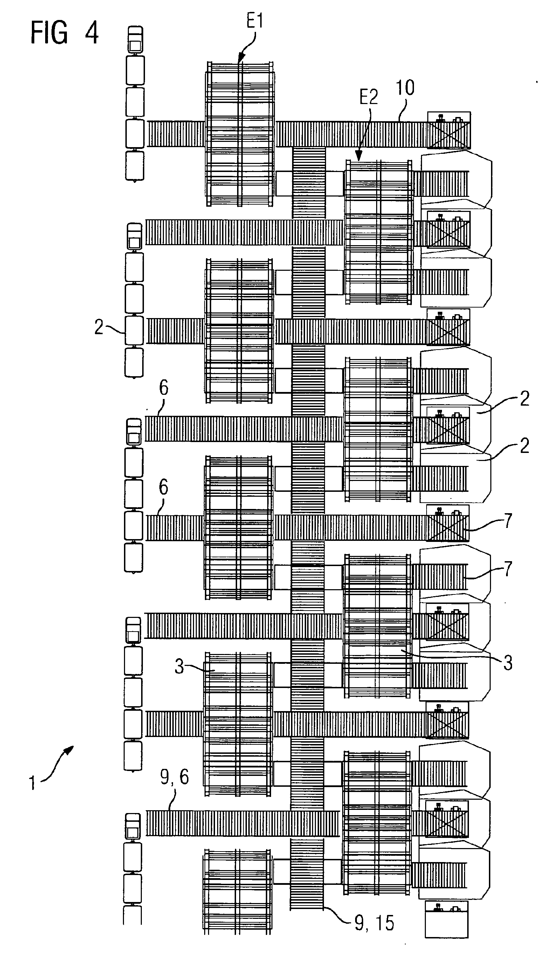

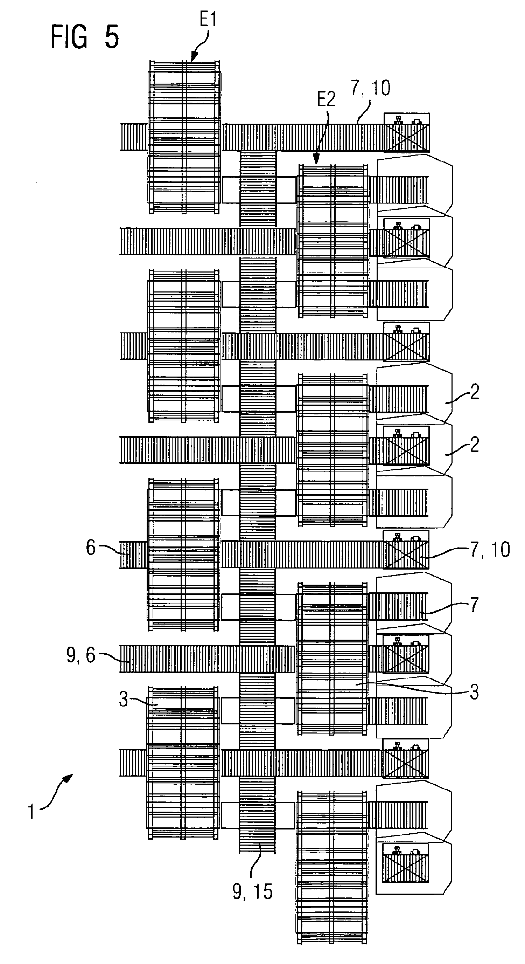

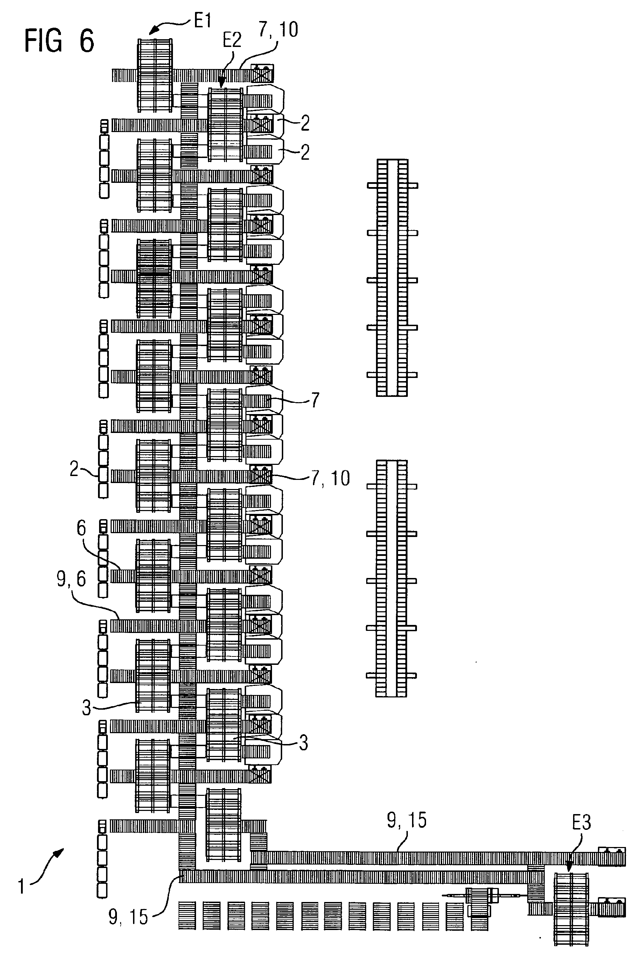

In den Figuren 3 bis 6 sind weitere, verschiedene alternative Ausführungsformen für eine Vorrichtung 1 dargestellt. Für eine möglichst große Lagerkapazität der Vorrichtung 1 sind in den Ausführungsbeispielen mehrere Kreislager 3 in mehreren Ebenen E1 bis E3 hinter-, neben- und zueinander parallel angeordnet. Auch können die Kreislager 3 in nicht näher dargestellter Art und Weise übereinander angeordnet sein.

Darüber hinaus kann die Lagerkapazität in nicht näher dargestellter Art und Weise weiter erhöht werden, indem die Lagerplätze 4 eines jeweiligen Kreislagers 3 in mehreren Ebenen hintereinander angeordnet sind.

Je nach Vorgabe können die Kreislager 3 in nicht näher dargestellter Art und Weise jeweils mit einem separaten Antriebssystems 11 betrieben werden. Dabei können die Kreislager 3 und/oder die Lagerplätze 4 verschiedener Ebenen asynchron oder synchron bewegt werden.

Zwischen den Kreislagern 3 sind je nach Vorgabe eine entsprechende Anzahl von Bereitstellungsbahnen 9 und/oder Staubahnen 10 angeordnet. Darüber hinaus können bei derartig großen Vorrichtungen 1 mit mehreren trommelartigen Kreislagern 3 Umlagerungsbahnen 15 zur Umlagerung von Lagereinheiten 2 zwischen Lagerplätzen 4 eines oder verschiedener Kreislager 3 vorgesehen sein.

## Patentansprüche

1. Vorrichtung (1) zur Lagerung von Lagereinheiten (2), insbesondere von Stückgutcontainern, umfassend mehrere um eine Drehachse (5) drehbaren Kreislager (3) mit mehreren, kreisförmig um die Drehachse (5) angeordneten Lagerplätzen (4), **dadurch gekennzeichnet daß** die Lagerplätze (4) der verschiedenen Kreislager um eine im Wesentlichen horizontale Drehachse (5) kreisförmig in mehreren zu einander parallelen vertikalen Ebenen hintereinander angeordnet sind und die Lagerplätze (4) der verschiedenen Ebenen asynchron oder synchron drehbar sind.

2. Vorrichtung nach Anspruch 1, wobei die Normalen der Lagerplätze (4) rechtwinklig zur Drehachse (5) verlaufen und während der Drehbewegung im Wesentlichen ihre Richtung beibehalten.

3. Vorrichtung nach Anspruch 1 oder 2, wobei die Lagerplätze (4) ein- oder beidseitig bestückbar sind.

4. Vorrichtung nach einem der vorhergehenden Ansprüche 1 bis 3, wobei die Lagerplätze (4) von einer Seite beladbar und der gegenüberliegenden Seite entladbar sind.

5. Vorrichtung nach einem der vorhergehenden Ansprüche 1 bis 4, wobei mindestens eine Einlagerungsbahn (6) und/oder eine Auslagerungsbahn (7) vorgesehen sind.

6. Vorrichtung nach Anspruch 5, wobei ein zu beladener Lagerplatz (4) zur Einlagerung an die Einlagerungsbahn (6) mündend positionierbar ist.

7. Vorrichtung nach Anspruch 5 oder 6, wobei ein zu entladener Lagerplatz (4) zur Auslagerung an die Auslagerungsbahn (7) mündend positionierbar ist.

8. Vorrichtung nach einem der Ansprüche 1 bis 7, wobei mehrere drehbare Kreislager (3) parallel zueinander, insbesondere nebeneinander, hintereinander, versetzt zueinander und/oder übereinander angeordnet sind.

9. Vorrichtung nach Anspruch 8, wobei mehrere Kreislager (3) asynchron oder synchron drehbar sind.

10. Vorrichtung nach einem der vorhergehenden Ansprüche 1 bis 9, wobei zwischen den Kreislagern (3) Bereitstellungsbahnen (9), Umlagerungsbahnen (15) und/oder Staubahnen (10) angeordnet sind.

11. Vorrichtung nach einem der vorhergehenden Ansprüche 1 bis 10, wobei die Einlagerurigsbahn (6), die Auslagerungsbahn (7), die Bereitstellungsbahn (9), die Umlagerungsbahn (15) und/oder die Staubahn (10) als Förderbänder, insbesondere Linearbänder, Rollenbänder oder Rollenförderer ausgebildet sind.

12. Vorrichtung nach einem der vorhergehenden Ansprüche 1 bis 11, wobei das oder die Kreislager (3) mittels eines jeweils separaten Antriebssystems (11) betrieben werden.

13. Verfahren (1) zur Lagerung von Lagereinheiten (2), insbesondere von Stückgutcontainern; wobei die lagereinheiten (2) kreisförmig um eine Drehachse (5) in mehreren Lagerplätzen (4) mehrerer Kreislager (3) in mehreren zu einander parallelen vertikalen Ebenen hintereinander gelagert werden, wobei die Lagerplätze (4) der verschiedenen Ebenen asynchron oder synchron gedreht werden.

14. Verfahren nach Anspruch 13, wobei die Lagereinheiten (2) ein- oder beidseitig des Kreislagers (3) den Lagerplätzen (4) zugeführt und abgeführt werden.

## Claims

1. Apparatus (1) for storing storage units (2), in particular piece-goods containers, comprising a plurality of circular stores (3) which are rotatable about a rotational axis (5) and have a plurality of storage places (4) arranged in a circular manner around the rotational axis (5), **characterized in that** the storage places (4) of the different circular stores are arranged one behind another in a circular manner about a substantially horizontal rotational axis (5) on a plurality of vertical levels in parallel with respect to one another, and the storage places (4) of the various levels are rotatable asynchronously or synchronously.

2. Apparatus according to Claim 1, wherein the normals of the storage places (4) run at right angles to the rotational axis (5) and substantially maintain their direction during the rotational movement.

3. Apparatus according to Claim 1 or 2, wherein the storage places (4) can be charged on one or both sides.

4. Apparatus according to one of the preceding Claims 1 to 3, wherein the storage places (4) can be loaded from one side and can be unloaded from the opposite side.

5. Apparatus according to one of the preceding Claims 1 to 4, wherein at least one store-entry lane (6) and/or one store-removal lane (7) is/are provided.

6. Apparatus according to Claim 5, wherein a storage place (4) which is to be loaded can be positioned for store-entry purposes such that it opens onto the store-entry lane (6).

7. Apparatus according to Claim 5 or 6, wherein a storage place (4) which is to be unloaded can be positioned for store-removal purposes such that it opens onto the store-removal lane (7).

8. Apparatus according to one of Claims 1 to 7, wherein a plurality of rotatable circular stores (3) are arranged parallel to one another, in particular next to one another, one behind another, offset with respect to one another and/or one above another.

9. Apparatus according to Claim 8, wherein a plurality of circular stores (3) are rotatable asynchronously or synchronously.

10. Apparatus according to one of the preceding Claims 1 to 9, wherein supply lanes (9), rearrangement lanes (15) and/or back-up lanes (10) are arranged between the circular stores (3).

11. Apparatus according to one of the preceding Claims 1 to 10, wherein the store-entry lane (6), the store-removal lane (7), the supply lane (9), the rearrangement lane (15) and/or the back-up lane (10) are designed as conveyor belts, in particular linear belts, roller belts or roller conveyors.

12. Apparatus according to one of the preceding Claims 1 to 11, wherein the circular store or the circular stores (3) is or are operated by means of a separate drive system (11) in each case.

13. Method (1) for storing storage units (2), in particular piece-goods containers, wherein the storage units (2) are mounted in a circular manner about a rotational axis (5) one behind another on a plurality of vertical levels in parallel with respect to one another in a plurality of storage places (4) of a plurality of circular stores (3), wherein the storage places (4) of the different levels are rotated asynchronously or synchronously.

14. Method according to Claim 13, wherein the storage units (2) are supplied to and removed from the storage places (4) on one or both sides of the circular store (3).

## Revendications

1. Installation ( 1 ) d'entreposage d'unités ( 2 ) de stockage, notamment de conteneurs de produit en vrac, comprenant plusieurs magasins ( 3 ) circulaires tournant autour d'un axe ( 5 ) de rotation et ayant plusieurs emplacements ( 4 ) de stockage disposés en forme de cercle autour de l'axe de rotation, **caractérisée en ce que** les emplacements ( 4 ) de stockage des divers magasins circulaires sont disposés les uns derrières les autres en forme de cercle en plusieurs plans verticaux parallèles entre eux autour d'un axe ( 5 ) de rotation sensiblement horizontal et les emplacements ( 4 ) de stockage des divers plans peuvent tourner de façon asynchrone ou de façon synchrone.

2. Installation suivant la revendication 1, dans laquelle les normales aux emplacements ( 4 ) de stockage s'étendent perpendiculairement à l'axe ( 5 ) de rotation et conservent sensiblement leur direction pendant le mouvement de rotation.

3. Installation suivant la revendication 1 ou 2, dans laquelle les emplacements ( 4 ) de stockage peuvent être garnis d'un côté ou des deux côtés.

4. Installation suivant l'une des revendications 1 à 3 précédentes, dans laquelle les emplacements ( 4 ) de stockage peuvent être chargés d'un côté et peuvent être déchargés du côté opposé.

5. Installation suivant l'une des revendications 1 à 4, dans laquelle il est prévu au moins une voie ( 6 ) d'entrée et/ou une voie ( 7 ) de sortie.

6. Installation suivant la revendication 5, dans laquelle un emplacement ( 4 ) de stockage à charger peut, pour le stockage, être mis en position en débouchant sur la voie ( 6 ) d'entrée.

7. Installation suivant la revendication 5 ou 6, dans laquelle un emplacement ( 7 ) de stockage à décharger peut, pour le stockage, être mis en position en débouchant sur la voie ( 7 ) de sortie.

8. Installation suivant l'une des revendications 1 à 7, dans laquelle plusieurs magasins ( 3 ) circulaires pouvant tourner sont disposés parallèlement en étant parallèles les uns aux autres, en étant notamment les uns à côté des autres, en étant les uns derrière les autres, en étant décalés les uns par rapport aux autres et/ou en étant superposés.

9. Installation suivant la revendication 8, dans laquelle plusieurs magasins ( 3 ) circulaires peuvent tourner de façon asynchrone ou de façon synchrone.

10. Installation suivant l'une des revendications 1 à 9 précédentes, dans laquelle des voies ( 9 ) de préparation, des voies ( 15 ) de transbordement et/ou des voies ( 10 ) d'attente sont disposées entre des magasins ( 3 ) circulaires.

11. Installation suivant l'une des revendications 1 à 10 précédentes, dans laquelle la voie ( 6 ) d'entrée, la voie ( 7 ) de sortie, la voie ( 9 ) de préparation, la voie ( 15 ) de transbordement et/ou la voie ( 10 ) d'attente sont constituées sous la forme de bandes convoyeuses, notamment de bandes linéaires, de bandes à rouleaux ou de convoyeurs à rouleaux.

12. Installation suivant l'une des revendications 1 à 11 précédentes, dans laquelle le ou les magasins ( 3 ) circulaires fonctionnent au moyen d'un système ( 11 ) d'entraînement respectivement distinct.

13. Procédé d'entreposage d'unité ( 2 ) de stockage, notamment de conteneurs de produit en vrac, les unités ( 2 ) de stockage étant stockées en forme de cercle autour d'un axe ( 5 ) de rotation en plusieurs emplacement ( 4 ) de stockage dans plusieurs magasins ( 3 ) circulaires se succédant dans plusieurs plans verticaux parallèles entre eux, dans lequel on fait tourner de façon asynchrone ou de façon synchrone les emplacements ( 4 ) de stockage des divers plans.

14. Procédé suivant la revendication 13, dans lequel on apporte les unités ( 2 ) de stockage aux emplacements ( 4 ) de stockage et on les en fait sortir d'un côté ou des deux côtés du magasin ( 3 ) circulaire.
